# EUROPÄISCHE PATENTANMELDUNG

(11) **EP 4 671 213 A2**
(43) Veröffentlichungstag der Anmeldung: **31.12.2025**
(21) Anmeldenummer: 25181365.5
(22) Anmeldetag: 06.06.2025
(51) Int. Cl.: C02F 1/00, B02C 18/00, B02C 25/00, B09B 3/35, C02F 103/32

(54) **SCHREDDER FÜR EINE BEHANDLUNGSVORRICHTUNG VON GASTROABWÄSSERN UND VERFAHREN ZUM BETRIEB EINES SCHREDDERS**

(30) Priorität: 07.06.2024 DE 102024001865
(71) Anmelder: Hirtl, Kurt, 8354 Sankt Anna am Aigen (AT)
(72) Erfinder: Hirtl, Kurt, 8354 Sankt Anna am Aigen (AT)
(74) Vertreter: Gleim Petri Patent- und Rechtsanwaltspartnerschaft mbB

(57) **Zusammenfassung**

Die Erfindung betrifft einen Schredder für eine Behandlungsvorrichtung von Abwässern, der einen Einfülltrichter (10), der mit einer sicherheitstechnisch verriegelten Abdeckung verschlossen ist, einen Antrieb, welcher gleichzeitig zur Kraftübertragung direkt auf ein Schneidwerk (12) und auf eine Abführpumpe (13) mit diesen verbunden ist, unterhalb des Schneidwerks (12) befindliche Förderschaufeln (18), die als Vorpumpe agieren, eine programmierbare Steuerung (16a), welche über eine Leistungsaufnahme des Antriebs mit einem sensorischen Erfassungssystem (16b) des Schwingverhaltens gekoppelt ist und eine Temperaturüberwachung eines Stators der Abführpumpe (13) umfasst,
wobei das sensorische Erfassungssystem einen Sensor umfasst, der ein Vibrationsmesser ist und der Schredder (1) eine Wasserzuführung aufweist.

## Beschreibung

Die Erfindung betrifft eine multifunktionelle Kompaktanlage zur Behandlung von Abwässern, Speiseresten und Altspeiseölen aus Gastrobetrieben, welche die energie-und wassersparende Selektion aller Abfallfraktionen und die Nachnutzung der in den Abfällen enthaltenden Bioenergie ermöglicht, während klimarelevante Emissionen der Entsorgung reduziert und die Abwasserqualität verbessert wird.

### Stand der Technik

Abfallströme aus gastronomischen Einrichtungen, Großküchen, Kantinen und Cateringbetrieben unterteilen sich im Wesentlichen in drei Fraktionen: Abwässer aus Geschirr-und Küchenreinigung, Speisereste und Rückstände aus der Zubereitung sowie verbrauchten Frittierölen und Rückstandsfetten aus Fritteusen, Grill-und Bratvorrichtungen.

Die in Betrieben oben genannter Art anfallenden "Abwässer" bestehen aus den Spül-und Reinigungswässern der Küchen und Gasträume die über Bodenabflüsse abgeführt werden. Hinzu kommt das Wasch-und Spülwasser aus Geschirr-, Besteck und Gerätewaschmaschinen. Diese Wässer enthalten neben den abgespülten fett-, protein-und kohlehydrathaltigen Anhaftungen auch die Spülmittelrückstände. Nach Gesetzesvorgaben sind die anfallenden Abwässer vor Einleitung in das Kanalnetz über Fettabscheider zu führen. Diese Anlagen sind in der Regel als Zweikammersysteme konstruiert und müssen in zwei-bis vierwöchigem Turnus durch Fachfirmen vollständig entleert werden. Nach Entleerung der Abscheider sind die Kammern dann wieder mit Frischwasser zu befüllen. Die zu entsorgenden Abwasservolumina werden von Spezialfahrzeugen aufgenommen und teilweise über größere Distanzen der sachgerechten Entsorgung zugeführt. Verfahrenstechnisch betrachtet sind die gebräuchlichen Fettabscheider diskontinuierlich arbeitende Mehrkammersysteme, gekennzeichnet durch eine Abscheider- und nachfolgend eine Klärungsstufe. Erfahrungsgemäß werden mit diesen Vorrichtungen jedoch die gesetzlich vorgeschriebenen Abwassereinleitwerte im Hinblick auf lipophile Stoffe mit max. 100 mg/I selten erreicht, meist jedoch signifikant überschritten. Die sich in den Abscheidern separierenden Fett-und Lipidphasen verfestigen sich insbesondere bei sinkenden Umgebungstemperaturen schnell zu einem pastösen Fettstock, der alle
spezifisch leichteren Komponenten aus dem Abwasser aufnimmt und gesamtheitlich eine sehr inhomogene und schwierig behandelbare Masse bildet. Deren selektive Abtrennung von der darunter liegenden

Wasserphase ist technologisch kaum möglich. Eine Separierung der spezifisch leichteren aber energiehaltigeren Fettphasen ist nach dem bisher vorgeschriebenen Abpumpvorgang der Kammern aufwändig. Aus herkömmlichen Fettabscheidern nach Stand der Technik werden demnach sowohl die
Schlammfänge für die absinkenden Bestandteile als auch die eigentlichen Abscheidekammern komplett entleert, wobei die Inhalte als nachweispflichtiger Sonderabfall zu entsorgen ist. Aufgrund des enorm hohen Wasseranteils liegt der Fettgehalt dieser Abscheiderinhalte im Mittel bei etwa 3 %. Wie oben beschrieben muss nach DIN 4040 das gesamte Wasservolumen der Abscheider bei jedem Entsorgungsvorgang entnommen und durch Frischwasser ersetzt werden. Je nach Abwasseraufkommen und Dimensionierung der installierten Abscheideranlagen sind Entsorgungsintervalle von 2 - 4 Wochen vorgegeben. Daraus resultieren neben hohen Kosten für den zu entsorgenden Anlagenbetreiber auch immense Abwasservolumina, die ihrerseits wiederum unter Energieeinsatz und stark kostenbehaftet zu transportieren und nachzubehandeln sind. Diese Logistik der Abwasserbehandlung und -entsorgung erscheint unter dem Aspekt aktueller Emissions-und Wasserproblematiken sowohl ökologisch als auch wirtschaftlich wenig sinnvoll und nicht mehr zeitgemäß. Den steigenden Erfordernissen nachhaltigen Wassermanagements und effizienterer Nutzung der noch enthaltenen Bioenergie kann damit nicht mehr angemessen entsprochen werden.

Unter dem Sammelbegriff "Speisereste" sind alle Rückstände zu verstehen, die einerseits bei der Zubereitung der Speisen und Getränke anfallen und andererseits als nicht verzehrte Reste zurückbleiben. Neben Gemüseresten, Kartoffeln, Panade und Pommes frites, begleitet von Ketchup, Dressings, Saucen und Getränkeresten gehören dazu auch Fleischreste und Gebäckrückstände. Als für das Entsorgungsmanagement problematisch erweisen sich zusätzlich Eierschalen, Kaffeesud und tierisches Knochenmaterial, insbesondere dann, wenn sich diese Komponenten anreichern und über größere Distanzen und Höhenniveaus befördert werden müssen. Die separat dafür vorgesehenen Sammelbehälter oder Container müssen ebenfalls in regelmäßigen Abständen im Wechselbetrieb getauscht werden. Eine gründliche Reinigung ist aus hygienischen Gründen selbstverständlich vorgeschrieben. Bezüglich der Einhaltung geforderter Hygienevorschriften zieht das für den innerbetrieblichen Transport einen hohen manuellen Aufwand für die Reinhaltung der Sammelbehälter nach sich. In der Mehrzahl der Fälle wird die Abholung dieser Abfallfraktion gesondert durchgeführt, da die Verwertung der Speisereste üblicherweise in Fermentern zur Biogasproduktion erfolgt und zusätzlich eine homogenisierende und hygienisierende Zwischen-oder Nachbehandlung erfordert. Soweit die anfallenden Speisereste nicht bereits einer vorhergehenden Zerkleinerung unterzogen wurden, fallen sie in schwierig handhabbarer und schlecht umschlagbarer Form und Konsistenz an. Zwischenlagerung, Umschlag und Transport gestalten sich durch hohen manuellen Aufwand zeitintensiv. Bei der Einbringung der Speisereste in die Biogasfermenter können aufgrund ihrer Inhomogenität und Grobstückigkeit die sensiblen stationären Prozessbedingungen des

Fermenters erheblich gestört werden. Das verlängert die hydraulische Verweilzeiten der Substrate in den Fermentern und zieht schlechtere Raum-Zeit-Ausbeuten an Biogas nach sich.

Bereits in der Praxis verwendete Zerkleinerer für diese Speisereste zeigen aufgrund der beschriebenen Inhomogenität und der schwankenden Anteile an anorganischen Inhaltsstoffen, wie etwa der Eierschalen, Knochen und Kaffeerückstände oft Betriebsstörungen und haben einen hohen Spülwasserbedarf, um die zerkleinerte Materie förderfähig und die Leitungs-und Abführsysteme frei zu halten.

Als dritte wesentliche Abfallfraktion werden noch verwertbare "Altspeiseöle", die den Fritteusen und Grillvorrichtungen entstammen in wiederum gesonderten Behältern gesammelt, um sie der energetischen Nachnutzung zuzuführen. Frische Frittieröle dürfen nur zeitlimitiert verwendet werden und sind nach definierten Benutzungsintervallen auszutauschen. Der Austausch geschieht aus Gründen der Zeitersparnis in der Praxis durch Entnahme der Öle im noch stark erhitzten Zustand. Die Entleerung der Fritteusen zum Zwecke des vorgeschriebenen Ölwechsels ist dahingehend kritisch zu bewerten, als bei knapp bemessener Wechselzeit und hohen Öltemperaturen (120 - 140°C) Gefährdungen des Betriebspersonals nicht ausschließbar sind, da für diese Operation bisher keine vollumfänglich sicher handhabbare Technologie zur Verfügung steht. Der Ölaustausch muss also manuell unter Einhaltung strikter Vorsichtsmaßnahmen und strenger Berücksichtigung der Arbeitsschutzbestimmungen durchgeführt werden.

Die aus Brätern und Grills abgetrennten Fette tierischer Herkunft gelangen meist über Abflüsse direkt in die Fettabscheider und führen dort, wie bereits beschrieben zur Bildung eines Fettstockes, der mechanisch schwierig zu handhaben und isolierbar ist und nicht selten zu Funktionsstörungen in den Abscheidern führt.

### Erfinderische Aufgabe

Im Hinblick auf
- die Minimierung von Transport-und Umschlagoperationen respektive einhergehender Emission,
- die effizientere Wassernutzung unter Einsparung wertvoller Trinkwasserressourcen,
- die notwendige Verbesserung der Abwasserqualität,
- die vollumfängliche Nutzung der in den Abfällen enthaltenen Bioenergie,
- das sachgerechte Management der Lebensmittelabfälle und Speisereste, die
- die Anhebung des Sicherheitslevels bezüglich Arbeitsschutz bei gleichzeitiger Zeitersparnis
- sowie die Optimierung hygienischer Rahmenbedingungen
leitet sich daher die erfinderische Aufgabe ab, eine multifunktionelle Behandlungsvorrichtung zu entwickeln, die aus logistischer Sicht ein Gesamtsystem bildet und alle Abfallfraktionen derart aufzunehmen vermag, daß es mit nur einer konzertierten Entsorgungsoperation möglich wird, die oben ausgeführten Nachteile des erhöhten Wasserverbrauches, der mangelhaften Reinigung der Abwässer, der problembehafteten Entsorgung der Speisereste sowie insbesondere des hohen Logistik-und Zeitaufwandes bei der Entsorgung der Einzelfraktionen inklusive des Tausches großer Wassermengen vermieden werden. Wesentliches Ziel der erfinderischen Lösung soll es auch sein, die in den Abfallströmen enthaltene Kohlenstofffracht so vorzubehandeln und zu fraktionieren, daß die vollumfängliche und wertschöpfende Nachnutzung der darin enthaltenen Bioenergie zu ermöglichen.

### Beschreibung der erfinderischen Lösung

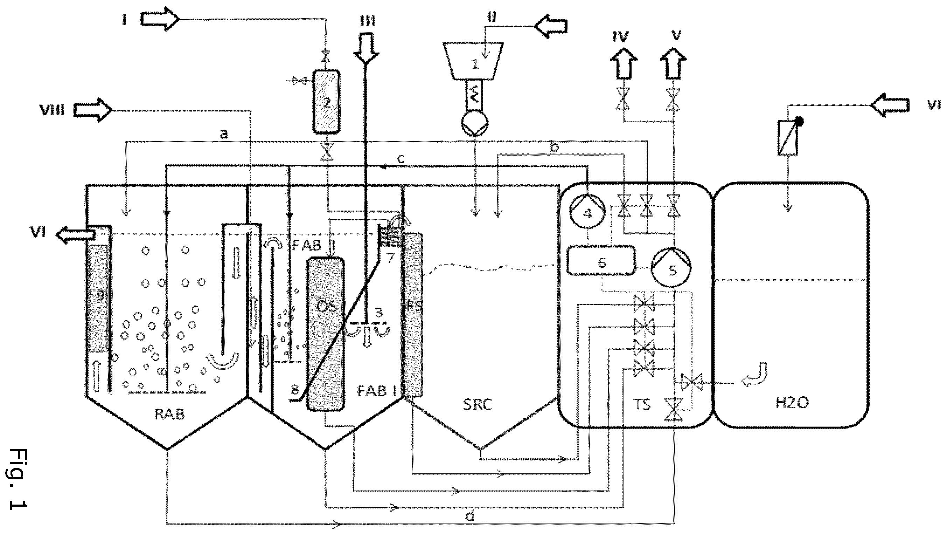

Die erfindungsgemäße multifunktionelle Behandlungsvorrichtung nach Figur 1 ist ein miteinander in sich segmentiertes System aus miteinander verbundenen Behältern unterschiedlicher Funktion, peripher ausgestattet mit zusätzlichen technologischen Komponenten. Die multifunktionelle Behandlungsvorrichtung dient der Erfassung, Konditionierung, Separierung, Zwischenspeicherung und Auslagerung der oben beschriebenen Hauptabfallströme gastronomischer Einrichtungen. Sie umfasst neben einer integrierten Techniksektion (TS) und einem Regenwasserspeicher (H2O) ein gegenüber dem Stand der Technik optimiertes Kammerabscheidesystem zur Abwasserbehandlung (FAB; RAB) mit einem darin integrierten und kontinuierlich arbeitenden Abtrennsystem für separierte Fette (5), einen Shredder zur Vorbehandlung von Speiseresten (1) sowie eine Entnahmevorrichtung für verbrauchte Frittieröle (3). Zur Erläuterung dieser multifunktionellen Behandlungsvorrichtung sind in der folgenden Legende alle Stoffströme mit römischen Ziffern bezeichnet, während die technischen Komponenten fortlaufend mit arabischen Zahlen durchnummeriert sind. Die Abscheider und Pufferbehälter sind mit dem funktionsbeschreibenden Buchstabenkürzel bezeichnet und in der nachfolgenden Legende erörtert.

### Legende zu den Figuren 1-3

### Stoffströme

- I: Zulauf Frittieröle
- II: Speisereste aus Restaurant und Küche
- III: Zulauf fetthaltiger Spül-und Reinigungswässer aus Restaurant und Küche
- IV: Ausschleusung separierter Öle und Fette
- V: Ausschleusung homogenisiertes Speiserestesubstrat
- VI: Abgang behandeltes Abwasser aus Abscheidersystem
- VII: Einspeisung Regenwasser in das Wasserreservoir
- VIII: Zudosierung Oxidator
- IX: Spülwasser Shredder

### Technische Komponenten

- 1: Shredder für Erzeugung des Speiserestesubstrates
- 2: Entnahmevorrichtung für verbrauchte Frittieröle
- 3: Diffuser
- 4: Kompressor Belüftung der Sektion FAB/RAB
- 5: Prozesspumpe
- 6: SPS programmierte Steuerungseinheit für Pumpe und Ventile
- 7: Abtrennsystem für separierte Fette
- 8: Schikane/Strömungsumlenkung
- 9: Biofilter
- 10: Einfülltrichter mit Sicherheitsverschluß
- 11: Wasserzulauf
- 11a: Mehrwegventil
- 12: Schneid-u. Mahlwerk
- 13: Abführpumpe
- 14: Substratabführung
- 15: Antrieb
- 15a: Kraftübertragung
- 16: Steuerungsmodul
- 16a: speicherprogrammierbare Steuerung
- 16b: Schwingungswächter
- 16c: Frequenzumformer
- 16d: Temperaturüberwachungseinheit
- 16e: Thermoelement
- 17: Wasserinjektoren Spülung/Schneid-u. Mahlwerk
- 17a: erster Wasserinjektor
- 17b: zweiter Wasserinjektor
- 18: Förderschaufeln
- 19: Pumpe Ölabführung
- 20: Grobfilter
- 21: Rückschlagsicherung Öl
- 22: Kleinkompressor Druckluft
- 23: Rückschlagsicherung Luft
- 24: Schnellschlußvorrichtung
- 25: Hochtemperatur-Flex-Schlauch
- 26: Gerätesteuerung
- 27: Öl aus Fritteuse 130 °C
- 28: Luft
- 29: Zum ÖS

### Behälter und Reservoirs

- SRC: Speiserestesammelbehälter
- FAB I: Vorabscheider 1. Segment
- FAB II: Vorabscheider 2. Segment
- RAB: Restfettabscheider/Nachklärungskammer
- TS: Techniksektion
- H2O: Regenwasserspeicher
- FS: Fettsammler
- ÖS: Ölsammler

### Rohrleitungen

- a: Frischwasserbefüllung
- b: Zirkulation
- c: Belüftung
- d: Entleerung Schlammfänge

Bei Eintritt der Zulaufwässer (III) in die Abscheidersektion (FAB) passiert das Abwasser zunächst wie in allen bekannten Vorrichtungen einen Vorabscheider FAB I. Hier werden nach Strömungsberuhigung durch den Diffuser (3) spezifisch schwerere Bestandteile und Sinkstoffe am Boden in einem Schlammfang gesammelt. Die zur Verhinderung der Kurzschlussströmung implementierte Schikane (8) sorgt für die Aufkonzentrierung der spezifisch leichteren, hauptsächlich Fette und Lipide enthaltenden Bestandteile in einer sich nach oben abscheidenden Lipidphase. Dazu kann die Schikane (8) beispielsweise als sich nach oben verjüngender, trichterförmiger Halbzylinder ausgebildet sein, so dass die Fläche, in der sich die Fette und Lipide aufkonzentrieren, möglichst gering ist. Der Diffuser (3) ist für die bestmöglichen Wirkung oberhalb einer Unterkante der Schikane angeordnet. Dies stellt sicher, dass in den Zulaufwässern (III) gelöste Fette und Lipide möglichst nicht aus dem durch die Schikane (8) abgetrennten Bereich gelangen können und sich sauber nach oben hin sammeln. Über einen, an die Auftriebsverhältnisse adaptierbaren Überlauf wird diese Lipidphase in den dafür vorgesehenen Sammelbehälter (FSC) kontinuierlich abgeführt. Der Wärmetauscher (7) sorgte für die Verflüssigung bzw. Flüssighaltung dieser Phase. Die gespeicherte Wärme aus dem Ölsammelbehälter (ÖS) und der heiß zulaufenden Frittieröle (I) wird in das Segment FAB I übertragen. Das ermöglicht die Temperierung des FAB auf 30-35°C, wodurch die Bildung eines soliden Fettstockes unterbunden wird. Auf diese Weise kann die kontinuierliche Abführung der sich nach oben abscheidenden Lipidphase in den Fettsammler (FS) stattfinden. Der selbsttätige Überlauf der Lipidphase kann durch die erfindungsgemäße Feineinstellung des Überlaufes so gestaltet werden, dass optimale Gleichgewichtsverhältnisse bezüglich der Fettphasenseparierung erreicht werden. Ein solches Gleichgewichtsverhältnis liegt vor allem dann vor, wenn in der Fettphase ein Wassergehalt von unter 2% und in der Wasserphase ein Restfettgehalt von unter 2000 mg/kg vorliegt. Der Überlauf ist auf dieses Gleichgewicht adaptierbar, wobei es betriebsbedingt hier zu Schwankungen kommt, so dass dieses Gleichgewicht zumindest im Mittel erreicht werden sollte. Die Einstellung des Überlaufs kann beispielsweise durch eine Höhenverstellung erfolgen.

Im Gegenentwurf zu bereits beschriebenen Verfahren mit separater Absaugung des Fettstockes werden so die Ausschleusung größerer Wasseranteile über die Lipidphase verhindert und gleichzeitig der Lipidanteil in der Wasserphase abgesenkt. Die Entnahme der aufkonzentrierten und im Fettsammler (FS) gepufferten Fette wird durch die in der Techniksektion (TS) installierte Prozesspumpe (5) ausgeführt.

Durch diese Betriebsweise kann die aufwändige Fettseparierung durch Skimmer oder ähnliche Installationen umgangen werden, das System arbeitet selbsttätig. Es ergibt sich ein weiterer Vorteil dahingehend, dass das so vorgereinigte Abwasser nur noch wenig emulgierte Fette und lipidähnliche Organik enthält. Die Nachbehandlung in der folgenden Sektionen FAB II und der Nachklärungskammer (RAB) durch Belüftung und durch optional dosierbare Addition eines Oxidationsmittels im Gegenstrom generiert eine Wasserqualität, die für die Verwendung als Brauchwasser geeignet ist. Überschüssiges, nicht als Brauchwasser genutztes Abwasser kann so unter Einhaltung der gesetzlich vorgeschriebenen Grenzwerte dem öffentlichen Kanalsystem zugeführt werden.

Zur turnusmäßigen Zwischenreinigung und Spülung der Sektionen SRC, FAB und RAB ist ein ausreichend dimensionierter Speicher für Regenwasser H2O in die Behälteranordnung integriert. Das hier gesammelte Regenwasser kann im Reinigungsmodus der multifunktionellen Behandlungsvorrichtung anstelle von frischem Trinkwasser für Spülung und Wiederauffüllung der Abscheidersektionen FAB und RAB genutzt werden.

Alle Abfälle enthaltenden Abscheider und Behälter sind durch Überdruckventile gesichert, während allfälliger Gasaustritt durch Atmungsrohre in den drucklosen Abwasserstrang (in der Anlagenskizze nicht explizit ausgeführt) geleitet wird.

Die Schlammfänge und Sümpfe der Sektionen FAB, RAB, ÖS und FSC werden regelmäßig, gesteuert über eine SPS (6) durch die Prozesspumpe (5) in den Speiserestesammelbehälter SRC abgeführt.

Im Bedarfsfall kann ebenfalls durch diese Pumpe der Inhalt des Speiserestesammlers SRC in Intervallen umgewälzt und homogenisiert werden. Die Glattwandigkeit und die, in herkömmlichen Systemen unübliche konische Geometrie der Böden der Abscheiderbehälter FAB I, FAB II und RAB erlaubt die restlose Entleerung durch Bodenabsaugung bei der routinemäßigen Wartung . Bekannte Konstruktionen mit Absaugung "on top" lassen das nicht zu. Die programmiert semikontinuierliche Abführung der Schlammfänge aus den Segmenten FAB I,FAB II sowie aus RAB vermindert die Kontaktfläche zwischen den flüssigen und festen Phasen und unterdrückt dadurch das unerwünschte Absinken des pH-Wertes durch forcierte Versäuerung des Mediums. Die optionale Integration eines Biofiltersystems am Wasserablauf (9) aus dem Segment RAB ist konstruktiv vorgesehen und kann durch zusätzliche adsoprtive Absenkung der Lipidwerte im Abwasser erhebliche Qualitätsverbesserung bewirken. Der Biofilter (9) ist ein mit vorbehandelten Lignozellulosen bestücktes, vorzugsweise als Kartuschenfilter ausgelegtes und leicht austauschbares System.

Im Segment TS sind die Prozesspumpe (5), der Kompressor (4) sowie die Steuerung (6) untergebracht. Dadurch wird die flächen-und volumensparende Installation der gesamten multifunktionellen Behandlungsvorrichtung sowohl oberirdisch als auch unter Flur möglich.

Für Beprobung und analytischen Kontrolle sind alle Abwasser enthaltenden Abscheider FAB II und RAB sowie deren Zu-und Abläufe mit Probenahmevorrichtungen für Qualitästprüfungen (in der Skizze nicht dargestellt) versehen. Die multifunktionelle Behandlungsvorrichtung kann aufgrund des kontinuierlichen Arbeitsmodus im Gegensatz zu praxisüblichen Systemen in verlängerten Intervallen und in einem einzigen Arbeitsgang gewartet und gereinigt werden. Dadurch reduzieren sich der Transportaufwand für die Entsorgung und damit einhergehende klimarelevante Emissionen maßgeblich.

Alle oben beschriebenen Behandlungsschritte verstehen sich in ihrer apparativen Auslegung als Teilkomponenten der erfindungsgemäßen multifunktionellen Behandlungsvorrichtung, welche eine Vielzahl von Vorteilen und Verbesserungen gegenüber der bisher praktizierten Entsorgunglogistik der Gastroabfälle ausweist.

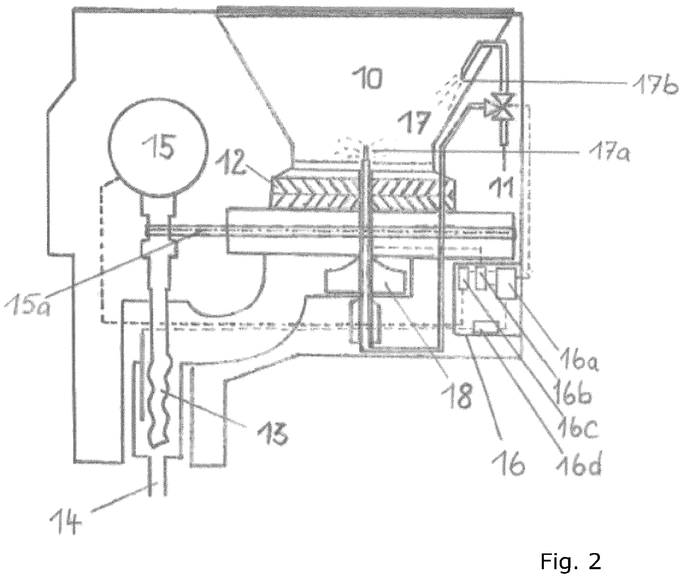

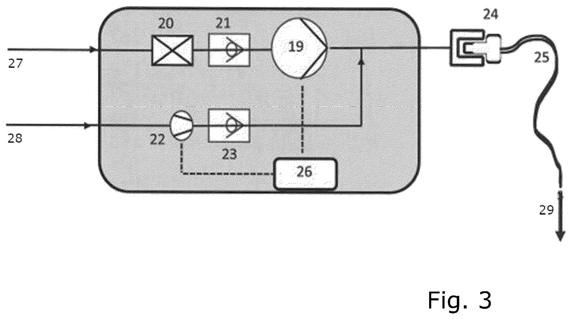

Die Komponenten Schredder (1) und Ölentnahmevorrichtung (3) werden nachfolgend in den Figuren 2 und 3 grafisch dargestellt und gesondert beschrieben.

Die Behandlung der Speisereste (II) mit dem erfindungsgemäß vorgeschlagenen, in Figur 2 näher beschriebenen Shredder generiert ein stark volumenreduziertes, gut förderfähiges, hygienisch unbedenkliches und lagerfähiges Biogassubstrat pastöser Konsistenz. Die wesentlichen Bestandteile des Shredders (1) sind ein Einfülltrichter (10) der mit sicherheitstechnisch verriegelter Abdeckung verschlossen ist, ein mit dem vorzugsweise als leistungsstarker Elektromotor (15) ausgeführter Antrieb, welcher gleichzeitig die Kraftübertragung direkt auf das Schneidwerk (12) und der, bevorzugt als Verdrängerpumpe und in besonders bevorzugter Weise als Exzenterschneckenpumpe mit verschleißfestem Stator ausgeführten Abführpumpe (13) verbunden ist. Die Kraftübertragung erfolgt von der getriebenen Welle auf das Schneidwerk über eine Kette, bevorzugt jedoch über einen Keilriemen. Wesentliche weitere Komponenten sind die als Vorpumpe agierenden Förderschaufeln (18), in hochlegiertem Edelstahl ausgeführt, eine bevorzugt via SPS programmierbare Steuerung (16a), welche über die Leistungsaufnahme des Motors, in bevorzugter Weise über einen integrierten Frequenzumformer (16c), mit dem ebenfalls im Modul Steuerung (16) integrierten sensorischen Erfassungsystem des Schwingungsverhaltens (16b) der Maschine gekoppelt ist, wobei der Sensor ein Vibrationsmesser und bevorzugt ein Schwingungswächter ist und abschliessend einer Temperaturüberwachung (16d) des Stators der Abführpumpe (13), die in bevorzugter Weise als Widerstandsthermometer ausgeführt ist.

Die Förderschaufeln (18) dienen der Förderung des von dem Schneidwerk (12) zerkleinerten Materials zu der Abführpumpe (13). Sie befinden sich unterhalb des Schneidwerks (12) und drehen sich hier zusammen mit diesem, indem sie an einer weiteren Welle, die auch mit dem Schneidwerk (12) in Wirkverbindung steht, befestigt sind. Sie verhindern, dass Lufteinschlüsse zur Abführpumpe (13) gelangen, indem sie diese auflösen, sowie einen Abriss des Materialflusses vom Schneidwerk (12) zur Abführpumpe (13), was, insbesondere wenn die Abführpumpe (13) als Exzenterschneckenpumpe ausgeführt ist, zu einer Beschädigung führen kann. Die weitere Welle ist an ihrer Unterseite mit einer Wasserzuführung verbunden, die weiter unten beschrieben werden soll.

Die optimierende Regelung des Wassermanagements (16a) unter Einbeziehung der Leistungs-, Temperatur-und Schwingungsdaten vereint grundsätzlich die Verbesserung der Performance des Schredders (1) mit wichtigen Funktionen des Hardware-Schutzes. Sie arbeitet auf Basis einer Kalibrierfunktion und kann manuell parametriert werden. Durch diese Verknüpfung der Daten wird neben Energie-und Wassereinsparung auch die Langlebigkeit und Zuverlässigkeit des Schredders (1) erhöht, was als Alleinstellungsmerkmal der erfindungsgemäßen Technologie im Vergleich zum Stand der Technik gelten darf.

Die Kablibrierfunktion beruht vorzugsweise auf zulässigen Leistungsdaten des Antriebs, der Temperatur des Stators der Abführpumpe und den von dem Vibrationsmesser aufgenommenen Schwingungsdaten. Je nachdem, wo der jeweilige Parameter in einem jeweils zulässigen Bereich liegt, wird die Wassermenge bestimmt, die durch Wasserinjektoren (17) in Richtung des Schneidwerks (12) gespritzt wird. Die Wasserinjektoren (17) sind über ein Ventil und einen Anschluss (11) an ein Wassernetz angeschlossen. Das Ventil ist elektrisch mit der Steuerung (16a) verbunden und wird durch diese angesteuert, in Firgur 2 gekennzeichnet durch die gestrichelt dargestellten Wirklinien. Vorteilhaft tritt das Wasser in Dosierpulsen aus, kann optional aber auch kontinuierlich zugeführt werden. Eine primäre Wasserzugabe erfolgt durch einen ersten Wasserinjektor (17a), der direkt mittig in der weiteren Welle, auf der das Schneidwerk (12) montiert ist und an welcher die Förderschaufeln (18) angebracht sind, aufgesetzt oder integriert ist und Wasser seitlich abgibt. Über einen zweiten Wasserinjektor (17b) wird im Schneidbetrieb üblicherweise weniger Wasser zugegeben, dieser dient insbesondere der Spülung des Schredders (1).

Die Kalibrierfunktion umfasst vorteilhaft ferner ein Abbruchkriterium, was immer dann vorliegt, wenn die zulässigen Bereiche in kritischer Weise verlassen werden. In dem Fall schaltet die Steuerung (16a) den Schredder (1) nach einer vorgegebenen Verzögerung ab.

Ein weiterer wichtiger Vorteil ist der Einsatz nur eines Antriebes, da er die Implementierung weiterer Förderpumpen (wie in EP 3467214A1 beschrieben) umgeht und eine hohe Flexibilisierung im Hinblick auf die Herausforderungen der Abförderung des Schreddergutes ermöglicht. Diese kann in Abhängigkeit von den baulichen und flächentechnischen Rahmenbedingungen stark variieren, was sich in langen Förderstrecken und großen Förderhöhen niederschlägt. Die erfindungsgemäße Konstruktion des Schredders (1) ermöglicht bei geringeren Distanzen und Förderhöhen auch das Arbeiten ohne die Abführpumpe (13), da die Förderschaufeln (18) die Funktion der Förderung über kurze Distanzen zuverlässig abdecken. Die einfach durchführbare Implementierung einer Förderschnecke (13) erhöht das Leistungsspektrum auf bisher unerreichbare 70 m Förderdistanz und 15 m Förderhöhe bei Querschnitten bis 80 mm. Dadurch ist dieser Schredder auch für Einrichtungen mit deutlich größerem Aufkommen an Speiseresten bestens geeignet und vergleichbaren marktüblichen Geräten überlegen.

Der Betrieb des Schredders (1) umfasst zunächst die manuelle Beschickung mit den Speiseresten (II) über den Einfülltrichter (10). Der Trichter kann bis auf 90% des verfügbaren Volumens gefüllt werden, ohne daß eine sensorische Füllstandsüberwachung benötigt wird. Die Öffnung des Deckels ist durch elektronische Endverriegelung nur bei Stillstand der Maschine möglich. Analog kann der Schredder (1) nur bei geschlossenem Deckel in Betrieb genommen werden. Über das manuell bedienbare Display wird nach vorgegebenem Programm der Zerkleinerungsmodus gestartet. Der Arbeitszyklus endet, wenn der Grenzwert der Leistungsaufnahme via Frequenzumrichter (16c) das untere Limit erreicht hat. Danach wechselt der Schredder (1) vom Zerkleinerungsmodus in den Spülmodus bis zur selbsttätigen Abschaltung.

Die Wasserzuführung ist so organisiert, dass im Zerkleinerungsmodus direkt in die Arbeitszone des Schneidwerkes (12) eingespritzt wird. Gegenüber marktbekannten Schreddern führt das zu energiereduziertem Betrieb. Die kühlende und reibmindernde Wirkung erhöht die Laufruhe des Schredders (1) und verlängert die Lebensdauer der mechanisch hoch beanspruchten Bauteile des Schneid-und Mahlwerkes (12).

In der besonderen Ausführungsform beruht das Wassermanagement auf der gleichzeitigen Verarbeitung der in die Steuerung (16) einlaufenden Informationen im Abgleich zur vorprogrammierten Kalibrierfunktion, die vorzugsweise als Vorlage für die in der Steuerung (16) implementierte SPS (16a) dient. Wasser-, Zeit-und Energiebedarf werden auf diese Weise auf ein Minimum reduziert.

Der Schwingungswächter (16b) dient wesentlich dem Schutz der Hardware und löst bei Überschreitung eines Grenzwertes den Abbruch des Arbeitszyklus aus. Ursachen für derartige Interruptionen können in Blockaden oder Verstopfungen im Abgangstrakt des Schredders (1) oder im unsachgemässen Einwurf metallischer Komponenten wie etwa von Bestecken liegen. In dem Fall wird der Operator durch ein akustisches Warnsignal und eine optische Warnleuchte informiert. Durch die bedarfsgerechte Wasserzuführung wird eine weitgehend gleichmässige Konsistenz des Speiserestesubstrates erzielt. Schwierig zu behandelndes anorganisches Material wie Eierschalen oder Tierknochen können so vorbehaltlos und störungsfrei verarbeitet werden.

Die Programmierbarkeit sowohl im Zerkleinerungs-als auch im Spülzyklus macht es möglich, den Schredder (1) in weiten Grenzen den variablen Anforderungen anzupassen.

Varianten der Hardwareauslegung ermöglichen die Adaption an schwierige räumliche und flächentechnische Herausforderungen im Falle notwendiger Nachrüstungen.

Entsprechende, in der Steuerung (16) hinterlegte Abschaltkriterien regeln die Kommunikation mit der Abführpumpe (13;15) und dem Füllstand im Reservoir für das Biogassubstrat (SRC).

Figur 3 beschreibt eine Vorrichtung zur Entnahme heißer Frittieröle (3) für den Fall des notwendigen Ölaustausches. Diese Ölentnahmevorrichtung (3) umfasst einen Vorfilter (20), zwei Rückstromsicherungsventile (21, 23), eine Absaugpumpe (19), einen Kleinkompressor (22), eine Kompressorsteuerung (26) und ein Kupplungselement (24). Eine weitere Komponente der Ölentnahmevorrichtung (3) ist ein hochtemperaturbeständiges, isoliertes, flexibles und leicht austauschbares Schlauchsystem (25).

Der Zulauf für Öle aus der Fritteuse (130°C) (27) ist durch den oberen linken Pfeil in Figur 3 gekennzeichnet, Der Eintritt von Luft (28) für den Kompressor (22) durch den unteren.

Die Ölentnahmevorrichtung (3) ermöglicht die schnelle Absaugung des heißen Öles ohne Berührungsrisiko und Gefährdungspotenzial für das Personal.

Der Filter (20), bevorzugt als schnell austauschbarer Kartuschenfilter ausgelegt und in besonders bevorzugter Form mit silikatischem Adsorptionsmittel bestückt, sorgt für die Rückhaltung organischer Bestandteile und die Bindung von Wasser. Die Pumpe (19), bevorzugt als selbstansaugende Drehschieberpumpe ausgeführt, gewährleistet den Abzug des Öles, wobei die ölführende Leitung gegen Eindringen von Luft durch die Rückstromsicherungsventil (21) gesichert ist. Die üblicherweise auftretende Kumulation von Depositen aus ungesättigten, zur Polymerisation neigenden Fetten in der druckseitigen Abgangsleitung und im Schlauchsystem wird vermieden durch pulsierende Druckluftströmung über den Kompressor (22). Auch hier verhindert ein Rückstromsicherungsventil (23) das Eindringen von Öl in den Luftkanal. Die Kompressorsteuerung (26) regelt den korrespondierenden Betrieb von Pumpe (19) und Kompressor (22). Bei Stillstand der Pumpe (19) ist der Kompressor (22) außer Betrieb.

Der vorgeschriebene Austausch der verbrauchten Frittieröle muss schnell und für das Betriebspersonal gefahrlos durchführbar sein. Diese Operation ist auch bei laufendem Gastrobetrieb unumgänglich. Ein Gefährdungspotenzial aufgrund der hohen Öltemperaturen ist mit den bisher üblichen Praktiken nicht auszuschließen. Die erfindungsgemäße Ölentnahmevorrichtung (3) ermöglicht nunmehr die berührungslose und verlustfreie Entnahme der heißen Öle, um diese dem Sammelbehälter (ÖS) zuzuführen. Dadurch kann die Wärmeenergie in die Abscheidersegmente FAB I und FAB II verlustarm übertragen werden. Auslaufende Restölmengen entfallen mithin. Das macht Nachreinigungsoperationen im Küchenbereich überflüssig.

Ein wesentliches Element dieser Geräteanordnung ist die Schnellschlußkupplung (24), welche im Fall der regelmäßig notwendigen Fritteusenreinigung - und wartung die Entkopplung vom Entsorgungssystem ermöglicht. Diese Kupplung stellt die Verbindung zwischen der fixierten Ölentnahmevorrichtung (3) und dem in der multifunktionellen Behandlungsvorrichtung verorteten Ölsammelbehälter (ÖS) über einen, den hohen thermischen und physikalischen Anforderung angepassten, spezialisolierten Hochtemperaturflexschlauch (25) her, was durch Pfeil (29) gekennzeichnet ist.

Die oben beschriebenen Komponenten sind gemäss Figur 2 stationär in einem Geräteblock fix montiert und können im Wartungs-oder Reparaturfall schnell und unkompliziert getauscht werden. Durch die Einführung dieser erfindungsgemäßen Ölentnahmevorrichtung (3) werden diverse Vorteile gegenüber der bisherigen Praxis erreicht. Diese bestehen in der Gewährleistung höchster Sicherheitsstandards für das Bedienpersonal, in der Reinhaltung des Ölabführstranges durch Verhinderung von Ablagerungen und Depositen sowie in der Vermeidung von Ölverlusten bei manueller Umfüllung in bewegliche und umzuschlagende Zwischenbehälter. Die Vorrichtung kann stationär verbleiben und durch die Flexibilisierung des Schlauchsystems dennoch mehrere Fritteusen entsorgen. Die sonst übliche manuelle Entnahme der heißen Öle mittels Absauglanzen entfällt. Systemwartung-und Reinigung der Fritteusen werden durch diese Technologie ebenfalls deutlich vereinfacht und zeitlich optimiert, da die Schnellschlußupplung (24) mit implementierter Rücklaufsicherung die abrupte und verlustfreie Trennung der Ölentnahmevorrichtung vom Ölsammler (ÖS) zulässt, ohne jegliche Leckage oder Verluste durch auslaufendes Öl hinnehmen zu müssen. Zusätzlicher Reinigungsaufwand im Hinblick auf gebundenes Personal und Chemikalienbedarf wird damit vermieden, wodurch gleichermaßen ein Beitrag zur Verbesserung der Hygiene erbracht ist. Darüber hinaus kann durch die Implementierung der Ölentnahmevorrichtung (2) in das multifunktionelle Behandlungssystem die hochkalorige Restwärme effizient nachgenutzt werden. Die kontinuierliche Fett-und Ölabtrennung aus dem FAB I unter Vermeidung eines festen oder pastösen Fettstockes wird dadurch möglich.

Die Verbesserung der Ölqualität bezüglich freier Fettsäure, Wassergehalt und Gesamtverschmutzung im Hinblick auf die spätere Weiterverarbeitung zu Biokraftstoff ist ein weiterer positiver Nebeneffekt. Dadurch reduziert sich downstream der technologische Aufbereitungssaufwand der Öle für den Biodieselprozess bei signifikant verbesserter Witschaftlichkeit durch geringeren Chemikalienaufwand Ausbeuteerhöhung.

### Ausführungsbeispiele

### Ausführungsbeispiel 1

In einem 4-Liter-Laborfermenter werden Speisereste bzw. deren organische Bestandteile unter anaeroben Konditionen im Batch-Verfahren zunächst durch Hydrolyse und Azidogenese zu organischen Säuren umgesetzt und anschliessend durch Methanogenese in Biogas konvertiert. Je Substrat wurden drei Batches durchgeführt, die folgende Datentabelle zeigt die Durchschnittsresultate aus diesen Ansätzen.

Die Ermittlung der organischen Trockensubstanz des Feedstocks (OTS) fand vor den Versuchen statt und ergab für ein repräsentatives Muster, bestehend aus einer statistischen Mischung typischer Speiseabfälle eines Fast-Food-Restaurants 26% w/w.

Die Durchführungsbedingungen wurden für beide Versuchsreihen streng konstant gehalten:
Temperatur: 35°C
Druck: 1013 mbar
Gehalt an OTS/batch: 26% w/w
pH-Wert zum Versuchsstart: 5,5
Substrat: 300 g
Wasserzusatz: 2500 ml
Rührerdrehzahl: 3 rpm

Die Behandlung der Speisereste für das Basis-oder Referenzsubstrat bestand in der manuellen Zerkleinerung auf Partikelgrößen von durchschnittlich 1-1,5 cm, wie sie von marktüblichen Zerkleinerungsapparaten erreicht wird und dem derzeitigen Stand der Technik entspricht.

Für die Behandlung des Versuchsmusters wurde der Prototyp des erfindungsgemäßen Shredders verwendet. Dieser verdichtet die Speisereste volumetrisch auf ca. 40% des ursprünglichen Volumens. Die Wasserzugabe zur Erreichung eines Gesamtvolumens von jeweils 4000 ml war für beide Versuche mit 2500 ml identisch.

Die Versuche wurden unter den Gesichtspunkten des Abbaus der organischen Trockensubstanz, der Entwicklung des CSB und der Bildungsrate von Methan ausgewertet, die Ergebnisse sind in der folgenden Tabelle zusammengefasst.

Die in der Tabelle aufgeführten Daten sind gemittelte Werte aus drei Versuchen je Versuchsreihe.

**Tabelle 1**

| Versuchsbedingungen/Kriterien | Versuchsreihe 1 (Referenzansatz; konvent. Vorbehandlung) | Versuchsreihe 2 (Prüfansatz; Vorbehandlung mit Shredder) |
|---|---|---|
| CSB Versuchsbeginn (mg/l) | 1928 | 1573 |
| Volumen Substrat (I) | 0,38 | 0,31 |
| OTS gesamt Versuchsbeginn (% w/w) | 26,2 | 26,2 |
| Gesamtgasbildung (NI/I Substrat) | 16,1 | 27,3 |
| Methanbildung (NI/I Substrat) | 13,3 | 18,9 |
| Batchlaufzeit bis Erreichung von 85% der Endausbeute an Methan (d) | 9,1 | 5,5 |
| Biogas total (NI) | 1215 | 2004 |
| Methanausbeute total (NI) | 973 | 1400 |
| Methananteil im Biogas (% v/v) | 57,3 | 68,6 |
| Laufzeit des Einzelbatches (d) | 36 | 36 |

### Gemittelte Resultate aus drei Versuchen zu je drei Versuchsreihen

Als Bewertungskriterium dient die Erreichung von 85% der maximalen, am Ende des Batches erzielten Methangasausbeute.

Das Durchschnittsergebnis belegt eine signifikante Verkürzung der Konvertierungszeit in der Versuchsreihe 2. Es ist auch erkennbar, dass durch Anwendung des erfindungsgemäßen Schredders eine höhere Gasausbeute bei besserer Gasqualität (höhere Methankonzentration) erzielt wird. Die Begründung liegt in der beschleunigten Homogenisierung und mithin besseren Verfügbarkeit des vergärbaren Kohlenstoffes für die Mikroorganismen. Übertragen auf die Praxis in kontinuierlich betriebenen Biogasfermentern kommt das einer Verkürzung der hydraulischen Verweilzeit gleich und zieht die Erhöhung der Raum-Zeit-Ausbeute der Anlagen, mithin eine Verbesserung der Wirtschaftlichkeit nach sich.

### Ausführungsbeispiel 2

Die Belastung des Abwassers mit lipophilen Komponenten ist ein essenzieller Parameter für die Einleitfähigkeit von Abscheiderwässern. Gesetzlich vorgegeben ist der Maximalwert von 100 mg/kg an schwerlöslichen, lipophilen Stoffen.

Eine Laboranlage, konfiguriert nach dem oben beschriebenen, erfindungsgemässen Fettabscheidesystem, wird im kontinuierlichen Betriebsmodus mit originalem Zulaufwasser aus zwei unterschiedlichen

Restaurantküchen beschickt. Zum Vergleich und zur Bewertung des Versuchsergebnisses wird die Qualität des Ablaufwassers durch einmalige Beprobung aus dem ersten und zweiten Abscheidersegment der
originalen Fettabscheider (Kammer 1 und Kammer 2) dieser beiden Küchen der Restaurants A und B herangezogen, wobei als Qualitätsmerkmale der CSB, der Gehalt an schwerlöslichen Lipophilen und der pH-Wert des Wassers nach den Normen DIN 38409-H41, DIN 38405-H41 und DIN 38402-A11 bestimmt werden. Zusätzlich wird eine nach Hausstandard ausgearbeitete enzymatisch-photometrische Methode zur Bestimmung triglyzeridischer Fette (*) verwendet. Diese Messung erfordert die vorausgehende Filtration der Probe. Um die summarische Leistung des Gesamtsystems im Hinblick auf mikrobiologischen und oxidativen Abbau validieren zu können, muss der originale Zulauf der Küchenwässer A und B nach den gleichen Parametern herangezogen werden.

### Versuchsdurchführung:

Die originalen Zulaufwässer A und B bilden den Feedstock für den vergleichenden Laborversuch.

Zur Sicherstellung der Stationarität wurde die Laborversuchsanordnung kontinuierlich über 36 h betrieben. Die Segmente Fettabscheider (FAB) und Restfettabscheider (RAB) wurde in ummantelten 2,5-I-Glasgefäßen durch einen Wasserthermostaten auf einer Temperatur von 30 ± 1 °C gehalten, um den Wärmeeintrag durch heiße Frittieröle nach erfindungsgemäßem Vorschlag zu simulieren. Beide Gefäße sind mit einer feinporigen Glasfritte zur Belüftung ausgestattet und werden mit ca. 2 I Luft je Stunde beaufschlagt.

Die sich im FAB als Oberphase abscheidende Fettphase wird nach der erfindungsgemäßen Technologie kontinuierlich entnommen.

Nach Erstbefüllung der mit Bodenablass ausgestatteten Abscheidegefäße wurde täglich portionsweise in zehn Chargen a 100 ml Küchenablaufwasser aus einem mit Rührwerk bestückten Vorratsgefäß in das Abscheidersystem eingeleitet, wobei das Rührwerk nur vor jeder Einleitung zum Zweck der Homogenisierung kurzzeitig in Betrieb genommen wurde, so daß auch die Sinkstoffe, Sedimente und Schwebstoffe in den Abscheider gelangen. Vermessen wurden die Wässer aus dem ersten Abscheider FAB sowie am Auslauf des RAB im Vergleich zum Zulaufwasser. Die erste Probenahme erfolgte 10 h nach Versuchsbeginn, weitere Proben wurden nach 20 h und schließlich am Versuchsende nach 36 h genommen.

Die erhaltenen Messresultate sind in den folgenden Tabellen dargestellt.

**Tabelle 2**

| Parameter | Abscheider Restaurant A | | | Abscheider Restaurant B | | |
|---|---|---|---|---|---|---|
| | Zulauf | Kammer 1 | Ablauf | Zulauf | Kammer 1 | Ablauf |
| pH | 5,5 | 4,9 | 4,6 | 6,2 | 5,3 | 5,4 |
| Temperatur (°C) | 24 | 19 | 18 | 22 | 18 | 16 |
| CSB (mg/kg) | 7 131 | 5167 | 4224 | 6653 | 4798 | 3376 |
| Lipophile (mg/kg) | 1315 | 578 | 452 | 1426 | 365 | 287 |
| Triglyzeride (mg/dl)* | 1143 | | 533 | 1097 | | 307 |

| | | | | | | |
|---|---|---|---|---|---|---|
| * In Ergänzung zu den Standardanalysenmethoden wird zusätzlich eine enzymatisch-photometrische Bestimmungsmethode für triglyzeridische Fette herangezogen. | | | | | | |

### Daten aus den Fettabscheidern der Restaurants A und B mit konventioneller Abwasserbehandlung

In beiden Fettabscheidern werden pastöse bis feste, zwei-bis vier Zentimeter dicke Fettschichten gefunden, welche zunehmend zu Fettsäuren hydrolysieren und u.a. den pH-Wert absenken bei gleichzeitiger Rückemulgierung von Fetten in die Wasserphase. Der vom Zulauf zum Abfluss hin absinkende pH-Wert zeigt die hydrolytische Versäuerung an.

Die Versuche wurden unmittelbar nach Probenahme begonnen. Eine konservierende oder konditionierende Zwischenbehandlung fand nicht statt. Das Vorlagegefäß war auf 19-21 °C konditioniert. Die Dosierung des Zulaufes erfolgte über ein zeitgliedgesteuertes Magnetventil am Boden des Vorlagegefäßes durch freien Zulauf.

**Tabelle 3**

| Parameter | Küchenwasser Restaurant A | | | | Küchenabwasser Restaurant B | | | |
|---|---|---|---|---|---|---|---|---|
| | Versuch 1 | | Versuch 2 | | Versuch 3 | | Versuch 4 | |
| | FAB | RAB | FAB | RAB | FAB | RAB | FAB | RAB |
| pH-Wert | | | | | | | | |
| 10 h | 5,4 | 6,2 | 5,3 | 6,4 | 6,0 | 6,2 | 6,1 | 6,1 |
| 20 h | 5,6 | 6,5 | 5,7 | 6,5 | 5,9 | 6,0 | 6,1 | 6,0 |
| 36 h | 5,4 | 6,5 | 5,8 | 6,7 | 6,1 | 6,6 | 6,0 | 6,4 |

| CSB (mg/kg) | | | | | | | | |
|---|---|---|---|---|---|---|---|---|
| 10 h | 4972 | 875 | 4896 | 881 | 6414 | 805 | 6203 | 745 |
| 20 h | 3825 | * | 3908 | 776 | 6405 | 728 | 6185 | 723 |
| 36 h | 3790 | 738 | 3821 | 655 | 6516 | 798 | 5972 | 766 |

| Lipophile (mg/kg) | | | | | | | | |
|---|---|---|---|---|---|---|---|---|
| 10 h | 2767 | 135 | 2910 | * | 1571 | 101 | 1580 | 112 |
| 20 h | 2697 | 121 | 2925 | 145 | 1550 | 97 | 1492 | 89 |
| 36 h | 2704 | 102 | 2539 | 109 | 1437 | 97 | 1509 | 97 |

| Triglyzeride (mg/dl) | | | | | | | | |
|---|---|---|---|---|---|---|---|---|
| 10 h | ** | 172 | ** | * | ** | 126 | 1485*** | 125 |
| 20 h | ** | 163 | ** | 147 | ** | 118 | 1517*** | 98 |
| 36 h | ** | 124 | 1377 | 152 | ** | * | 1507*** | 108 |

| | | | | | | | | |
|---|---|---|---|---|---|---|---|---|
| FAB Fettabscheider (entsprechend Skizze) - Probenahme am Überlauf zu RAB RAB Restfettabscheider (entsprechend Sikzze) - Probenahme am Ablauf * Messwert nicht erhoben ** Überschreitung des Messbereiches *** gemessen nach Probenverdünnung und Extrapolation | | | | | | | | |

### Ergebnisse aus dem kontinuierlichen Abscheiderbetrieb in der Laborapparatur nach erfindungsgemäßer Konstruktion

Die Ergebnisse zeigen gute Reproduzierbarkeit und lassen erkennen, daß durch die gewählte Abscheiderkonfiguration unter den angegebenen Arbeitsbedingungen günstigere Abbau-und Reinigungseffekte zu erzielen sind und die Erreichung der gesetzlich geforderten Grenzwerte sehr wohl im Bereich der Möglichkeiten liegt, was im Rahmen der Vergleichsuntersuchungen für die beprobten konventionellen Abscheidersysteme (Tabelle 1) nicht nachgewiesen werden konnte. Durch die kontinuierliche Entnahme der sich abscheidenden Fette im FAB pegelt sich, den Ergebnissen folgend ein stationärer Beladungszustand ein, der es zulässt, den Inhalt des FAB nicht in den geforderten Kurzzeitintervallen von 2 - 4 Wochen wechseln zu müssen, wodurch sich eine erhebliche Einsparung an Frischwasser ergibt.

### Recherchierte Patente und Publikationen

*Depatisnet und Espacenet in den Patentklassen*
   A23N
   B02C, B01B, B01D, B63J
   C02F
*Einzelpatente*
   WO2020148695 (A2)
   AT395411B
   DE20103128 (U1)
   SG10201808836W (A)
   CH711663
   AT87279E
*Publikationen*
   Bachon, U., Belouschek, P., Weiler, W.: "Rückhaltung und Verwertung von Inhaltsstoffen der flüssigen Phase aus Großküchenbetrieben, Entwicklung eines Frischfettabscheiders mit integrierter Nährstoffrückgewinnung" Forschungsbericht 103 01 246 im Auftrag des Umweltbundesamtes, Berlin 1994 www. nicht sicher - floeser.de
   Flöser V.: "Aktuelle Rechtslage bei der Einleitung von Abwasser aus Einrichtungen der Gemeinschaftsverpflegung und Möglichkeiten der Abwasservorbehandlung"
   Internet: Zerkleinerer für Küchenabfälle

### Weitere Ausführungsformen

**1** Multifunktionelle Behandlungsvorrichtung zur wasser-und energiesparenden Behandlung von Gastroabwässern, Speiseresten und Altspeisefetten bestehend aus kontinuierlich arbeitendem Fettabscheider mit segmentierter Vorabscheidung und Wärmerückgewinnungssystem, mehrstufiger Wasseraufbereitung unter Verwendung von Biomassefiltern, Schredder zur Erzeugung eines Substrates aus Speiseresten mit Pufferbehälter, Entnahmevorrichtung für verbrauchte Frittieröle mit zugehörigem
   Pufferbehälter, Speicher für Regenwasser und separate Sektion für Prozess-und Steuertechnik, gekennzeichnet dadurch, dass die mehrstufige Abwasserbehandlung mit kontinuierlich ausgeführter Fettabscheidung, die Konditionierung, die Fraktionierung und die Zwischenspeicherung der Abfallstoffströme sowie die Unterbringung der Steuertechnik und des Regenwasserwasserspeichers vermittels einer segmentierten Mehrkammertankanlage in nur einem Apparatesystem zusammengeführt sind.
**2** Multifunktionelle Behandlungsvorrichtung nach Ausführungsform 1 dadurch gekennzeichnet, dass die Vorabscheidekammer für Küchenabwässer durch Schikane und Strömungsumlenkung in zwei miteinander verbundene, jedoch funktionell verschiedene Segmente FAB I und FAB II geteilt ist, wobei die durch Wärmetausch im ersten Segment FAB I abgeschiedene Lipidfraktion durch Implementierung eines Wärmetauschers unter Nutzung von Abwärmen abgezogener Frittieröle flüssig gehalten wird und über eine, dem Lipidaufkommen adaptierbare Vorrichtung mit justierbarem Überlauf verfügt, der die kontinuierliche Abführung der Lipidphase mit stark reduziertem Wasseranteil aus diesem Segment ermöglicht.
**3** Multifunktionelle Behandlungsvorrichtung nach Ausführungsform 1 dadurch gekennzeichnet, dass im zweiten Segment der Fettabscheidung FAB II bereits unter forciert aeroben Bedingungen der oxidative Abbau der Restorganik durch Belüftung und Addition von Oxidationsmitteln optional eingeleitet werden kann.
**4** Multifunktionelle Behandlungsvorrichtung nach Ausführungsform 1 dadurch gekennzeichnet dadurch, dass der sich als Bodensediment separierende Schlamm in den Segmenten FAB und RAB in konisch geformten Schlammfängen aufgenommen und von dort zeitprogrammiert abgeführt wird.
**5** Multifunktionelle Behandlungsvorrichtung nach Ausführungsform 1 dadurch gekennzeichnet, dass der in den Klärungssektionen FAB II und RAB eingetragene Oxidationspromotor ein Sauerstoffdonator, bevorzugt eine peroxidische Komponente ist, die bezogen auf aktiven Sauerstoff im Molverhältnis 1: 40000 dem noch messbaren Fettäquivalent zudosiert werden kann während die abschliessende Filtereinheit mit vorkonditionierter , bevorzugt Lignozellulose enthaltender Biomasse bestückt ist, wobei selbige aktive Oberflächen von mindestens 150 m2/g sowie ein hohes Adsorptionsvermögen für Lipide bei gleichzeitig geringem Strömungswiderstand aufweist.
**6** Multifunktionelle Behandlungsvorrichtung nach Ausführungsform 1 dadurch gekennzeichnet, daß der mit nur einem Antriebsaggregat, vorzugsweise einem Elektromotor ausgestattete Schredder die Kraft über bevorzugt einen Zahnriemen sowohl auf das Mal-und Schneidwerk als auch die Abförderpumpen überträgt, dabei durch sensorgestützte Feststellung des Feuchtegrades, bevorzugt über die Stromaufnahme des Antriebes, die Spül-und Kühlwasserdosierung über ein Steuerprogramm sowie über eine steuerungstechnisch vorgesehene Drehzahlanpassung so regelt, dass dadurch das Mal-und Schneidwerk die Zerkleinerung aller, insbesondere sehr harter anorganischer Speisereste auf Partikelgrößen bis maximal 4mm ermöglicht und das Schreddergut 3% bis max. 5% Wasser enthält, wobei der Elektroenergiebedarf des Schredders auf ein Minimum begrenzt und die Lebensdauer der Hardware verlängert wird.
**7** Multifunktionelle Behandlungsvorrichtung nach Ausführungsform 6 dadurch gekennzeichnet, daß der Schredder durch sensorische Ausstattung des Mal-und Schneidwerkes, bevorzugt durch einen Schwingungssensor, die Selektion unerwünschter Komponenten wie etwa metallischer Teile oder Kunststoffkomponenten ermöglicht, indem bei Grenzwertüberschreitung der Schredder gestoppt wird, wodurch Schäden an den mechanisch stark beanspruchten Bauteilen vermieden werden.
**8** Multifunktionelle Behandlungsvorrichtung nach Ausführungsform 1 dadurch gekennzeichnet, daß die erfindungsgemäße Ölentnahmevorrichtung das heiße Frittieröl über austauschbare Filter absaugt, durch programmierte Druckluftpulse Plaques, Deposite und Verharzungen in den Abführleitungen verhindert und das Öl in den dafür vorgesehenen Sammler des Multifunktionstanks über ein für hohe Temperaturen ausgelegtes, leicht austauschbares und isoliertes Schlauchsystem mit leckagefreier Schnellschlußkupplung befördert.
**9** Multifunktionelle Behandlungsvorrichtung nach Ausführungsform 1 dadurch gekennzeichnet, daß eine von aussen gut begehbare, separate Sektion der multifunktionellen Behandlungsvorrichtung die gesamte Betriebs-und Steuertechnik aufnimmt.
**10** Multifunktionelle Behandlungsvorrichtung nach Ausführungsform 1 dadurch gekennzeichnet, daß ein in der multifunktionellen Behandlungsvorrichtung integrierter Regenwassersammler für die nötigen Spül-und Reinigungszyklen hinreichend großes Wasservolumen speichert und vorhält.

## Patentansprüche

1. Schredder für eine Behandlungsvorrichtung von Gastroabwässern, umfassend
- einen Einfülltrichter (10), der mit einer sicherheitstechnisch verriegelten Abdeckung verschlossen ist,
- einen Antrieb, welcher gleichzeitig zur Kraftübertragung direkt auf ein Schneidwerk (12) und auf eine Abführpumpe (13) mit diesen verbunden ist,
- unterhalb des Schneidwerks (12) befindliche Förderschaufeln (18), die als Vorpumpe agieren,
- eine programmierbare Steuerung (16a), welche über eine Leistungsaufnahme des Antriebs mit einem sensorischen Erfassungssystem (16b) des Schwingverhaltens gekoppelt ist und
- eine Temperaturüberwachung eines Stators der Abführpumpe (13),
- wobei das sensorische Erfassungssystem einen Sensor umfasst, der ein Vibrationsmesser ist und
- der Schredder (1) eine Wasserzuführung aufweist.

2. Schredder nach Anspruch 1, wobei die Abführpumpe (13) als eine Verdrängerpumpe, vorzugsweise als Exzenterschneckenpumpe mit verschleißfestem Stator, ausgeführt ist.

3. Schredder nach Anspruch 1 oder 2, wobei die Kraftübertragung über eine Kette oder einen Keilriemen erfolgt.

4. Schredder nach einem der Ansprüche 1 bis 3, wobei die Leistungsaufnahme des Antriebs über einen integrierten Frequenzumformer (16c) mit dem sensorischen Erfassungssystem (16b) gekoppelt ist.

5. Schredder nach einem der Ansprüche 1 bis 4, wobei der Vibrationsmesser ein Schwingungswächter ist.

6. Schredder nach Anspruch 5, wobei der Schwingungswächter bei Überschreitung eines Grenzwerts einen Abbruch eines Arbeitszyklus auslösend ausgestaltet ist.

7. Schredder nach einem der Ansprüche 1 bis 6, wobei die Steuerung (16a) unter Einbeziehung von Leistungs-, Temperatur- und Schwingungsdaten den Schredder regelt.

8. Schredder nach Anspruch 7, wobei die Steuerung (16a) auf Basis einer Kalibrierfunktion arbeitet, um in Abhängigkeit der Leistungs-, Temperatur- und Schwingungsdaten die Wasserzuführung zu regeln.

9. Schredder nach einem der Ansprüche 1 bis 8, wobei die Wasserzuführung zum einen seitlich direkt in eine Arbeitszone des Schneidwerks (12) gerichtet ist und zum anderen an dem Schneidwerk (12) vorgesehen ist.

10. Verfahren zum Betrieb eines Schredders (1), umfassend die folgenden Schritte:
- Beschickung des Schredders (1) mit Speiseresten über einen Einfülltrichter (10),
- Starten eines Zerkleinerungsmodus,
- Enden des Zerkleinerungsmodus, wenn ein Grenzwert einer Leistungsaufnahme via Frequenzumrichter ein unteres Limit erreicht hat.
- Wechsel von dem Zerkleinerungsmodus in einen Spülmodus, wobei
- eine Wasserzuführung so organisiert ist, dass im Zerkleinerungsmodus direkt in eine Arbeitszone eines Schneidwerks (12) des Schredders (1) eingespritzt wird.

11. Verfahren nach Anspruch 9, wobei die Wasserzuführung durch eine Steuerung (16a) gesteuert wird, die anhand einer Kalibrierfunktion unter Einbeziehung von Leistungs-, Temperatur-und Schwingungsdaten die Wasserzuführung regelt.

12. Verfahren nach Anspruch 11, wobei die Schwingungsdaten über einen Schwingungswächter erfasst werden und bei der Überschreitung eines Grenzwerts ein Abbruch des Zerkleinerungsmodus erfolgt.

13. Verfahren nach einem der Ansprüche 10 bis 13, wobei die Wasserzuführung gleichzeitig seitlich auf das Schneidwerk (12) gerichtet und zentral am Schneidwerk (12) erfolgt.

14. Verfahren nach einem der Ansprüche 10 bis 13, wobei der in der Steuerung (16) Abschaltkriterien hinterlegt sind, die eine Kommunikation mit einer Abführpumpe (13, 15) des Schredders (1) und einem Reservoir für ein Biogassubstrat regeln.

15. Behandlungsvorrichtung von Abwässern, die einen Schredder (1) nach einem der Ansprüche 1 bis 9 aufweist oder ein Verfahren zum Betrieb eines Schredders (1) nach den Ansprüchen 10 bis 14 ausführt.
